## Europäisches Patentamt
## European Patent Office
## Office européen des brevets

(19)

(11) Veröffentlichungsnummer: **0 171 521**
**B1**

(12)

# EUROPÄISCHE PATENTSCHRIFT

(45) Veröffentlichungstag der Patentschrift: **30.01.91**

(51) Int. Cl.⁵: **B 23 B 51/00**

(21) Anmeldenummer: **85106077.2**

(22) Anmeldetag: **17.05.85**

(54) **Bohrvorrichtung zur Herstellung von Bohrlöchern mit an beliebiger Stelle setzbaren Hinterschneidungen.**

(30) Priorität: **14.07.84 DE 3426092**

(43) Veröffentlichungstag der Anmeldung:
**19.02.86 Patentblatt 86/08**

(45) Bekanntmachung des Hinweises auf die
Patenterteilung:
**30.01.91 Patentblatt 91/05**

(84) Benannte Vertragsstaaten:
**AT BE CH FR GB IT LI NL**

(56) Entgegenhaltungen:
EP-A-0 034 658
EP-A-0 038 405
EP-A-0 044 386
DE-A-2 657 000
DE-A-3 150 743
DE-A-3 227 767
FR-A-2 246 343
GB-A-2 005 572
US-A-4 154 311

(73) Patentinhaber: **fischer-werke Artur Fischer
GmbH & Co. KG
Weinhalde 14-18
D-7244 Waldachtal 3/Tumlingen (DE)**

(72) Erfinder: **Fischer, Artur, Dr. h. c.
Weinhalde 34
D-7244 Waldachtal 3/Tumlingen (DE)**

# Beschreibung

Die Erfindung betrifft eine Bohrvorrichtung zur Herstellung von Bohrlöchern mit an beliebiger Stelle setzbaren Hinterschneidungen, bestehend aus einem Bohrer mit einem radial den Bohrschaft überragenden Seitenschneiden aufweisenden Bohrplättchen, einem über den Bohrschaft gestülpten Bund, der sich zur Bildung eines Schwenklagers in einer Mulde eines einen hülsenförmigen, in das Bohrloch eingreifenden Zentrieransatz aufweisenden Aufnahmeteils abstützt, siche US—A—4 154 311.

Eine aus der DE—PS 30 27 408 bekannte Bohrvorrichtung ermöglicht in einfacher Weise das Herstellen von Bohrungen mit einer Hinterschneidung in der Bohrlochtiefe durch Schwenken des Bohrers, wenn die Bohrlochtiefe erreicht ist. Die Mulde des Aufnahmeteils stützt beim Schwenkvorgang den an der Bohreraufnahme angeordneten Bund ab, so daß sichergestellt ist, daß das Ausreiben der Hinterschneidung erst mit Erreichen der Bundanlage in der Mulde möglich ist. Mit der bekannten Bohrvorrichtung ist somit eine jederzeit reproduzierbare Bohrlochgeometrie herstellbar, so daß auf diese Bohrlochgeometrie abgestimmte Befestigungselemente zur Verankerung verwendet werden können. In der Befestigungstechnik insbesondere im Schwerlastbereich wird sehr häufig auch von der Möglichkeit Gebrauch gemacht, in ein größer gebohrtes zylindrisches Bohrloch eine Ankerstange einzusetzen und mit einer Verbundmasse, bpsw. einer Zementmischung oder Kunstharzmasse, auszufüllen. Der Haltewert einer solchen Befestigung hängt von der Bohrlochgeometrie ab. Bei unregelmäßig geformten Bohrlöchern ist in der Regel ein höherer Haltewert zu erreichen als bei genau zylindrisch ausgeführten Bohrlöchern.

Aus der DE—A—31 50 743 ist eine Hinterschneidevorrichtung bekannt, mit der in unterschiedlichen Tiefen eines bereits vorhandenen Bohrloches Hinterschneidungen herstellbar sind. Diese Hinterschneidevorrichtung ist nicht geeignet, während der Herstellung eines Bohrlochs in unterschiedlichen Bohrlochtiefen eine Hinterschneidung auszureiben. Außerdem ist bei dieser Hinterschneidevorrichtung ein am Schaft der Vorrichtung verstellbarer Anschlag erforderlich, damit während des Ausreibvorganges die Vorrichtung in einer bestimmten Bohrlochtiefe fixiert werden kann. Diese bekannte Hinterschneidevorrichtung ist in der Praxis kann anwendbar, da zwei separate Vorrichtungen zur Erstellung des Bohrloches bzw. zur Anbringung von Hinterschneidungen erforderlich sind.

Der Erfindung liegt die Aufgabe zugrunde, eine Bohrvorrichtung zu schaffen, mit der an beliebiger Stelle eine oder mehrere Unregelmäßigkeiten des Bohrloches in Form von Hinterschneidungen erzeugt werden können.

Erfindungsgemäß wird dies dadurch erreicht, daß der Bund kugelförmig ausgebildet ist, daß der Bohrer während des Bohrvorganges in dem kugelförmigen Bund axial verschiebbar ist, und daß das Aufnahmeteil die Rückseite des Bundes umfaßt.

Mit dem in der Bohrmaschine eingespannten Bohrer wird soweit zylindrisch angebohrt, bis der Zentrieransatz des Aufnahmeteils in das Bohrloch eingreift und das Aufnahmeteil an der Meuerwerksaußenfläche anstößt. Durch die umfassende Halterung des auf dem Bohrschaft axial verschiebbaren Bundes im Aufnahmeteil besteht zu jeder Zeit die Möglichkeit, durch Ausschwenken des Bohrers und Rührbewegungen mit dem Bohrplättchen des Bohrers eine Hinterschneidung auszureiben. Nach dem Ausreiben der Hinterschneidung wird die Bohrmaschine wieder senkrecht gestellt und ein weiteres zylindrisches Teilstück des Bohrloches gebohrt, wobei der Bohrervorschub durch den Bund hindurch erfolgt. An jeder beliebigen Stelle kann durch Einlegen eines Schwenk- und Rührvorganges eine weitere Hinterschneidung ausgerieben werden. Mit der erfindungsgemäßen Bohrvorrichtung sind somit Bohrlöcher mit ein oder mehreren Hinterschneidungen herstellbar, so daß eine auf Formschluß beruhende Einbindung einer Ankerstange ermöglicht ist.

In einer weiteren Ausgestaltung der Erfindung kann das Aufnahmeteil zweiteilig ausgebildet sein, und das die Rückseite des Bundes umfassende Schließteil auf dem die Mulde aufweisenden Anschlagteil aufschraubbar sein. Durch die Umfassung des Bundes wird dieser in dem Aufnahmeteil sowohl beim Bohrervorschub als auch beim Zurückziehen des Bohrers im Aufnahmeteil gehalten.

In einer weiteren Ausgestaltung der Erfindung kann zwischen der Hülsenbohrung des Schließteiles und dem Bohrschaft ein Ringspalt bestehen, der den auf den gewünschten Ausformgrad der Hinterschneidung abgestimmten Schwenkwinkel begrenzt.

Schließlich kann die Stirnseite des Anschlagteiles eine konvexe Wölbung aufweisen. Durch die konvexe Wölbung der Stirnseite des Anschlagteiles wird ein Verkanten des Zentrieransatzes bei nicht genau rechtwinklig verlaufendem Bohrloch vermieden.

Zur besseren Handhabung der Bohrvorrichtung kann an dem Aufnahmeteil ein als Handgriff ausgebildeter Rohrstutzen angeordnet sein.

In der Zeichnung ist ein Ausführungsbeispiel der Erfindung dargestellt.

Es zeigen:

Figur 1 die erfindungsgemäße Bohrvorrichtung

Figur 2 die Befestigung eines Gegenstandes

Die Bohrvorrichtung besteht aus dem in die Bohrmaschine 1 eingespannten Bohrer 2, auf dem ein axial verschiebbarer kugelförmiger Band 3 übergestülpt ist. Das Bohrplättchen 4 des Bohrers weist neben der Stirnschneide 5 noch radial über den Bohrschaft hinausragende Seitenschneiden 6 auf. Der auf dem Bohrschaft sitzende Bund 3 wird von dem zweiteiligen Aufnahmeteil 7 gehalten, so daß eine Verschiebung des Bohrers 2 durch den Bund 3 hindurch zur Ausführung der Vorschubbewegung ermöglicht ist. Zur Herstellung des Bohrloches 8 wird zunächst ein zylindrisches Teilstück soweit gebohrt, bis der hülsenförmige Zentrieransatz 9 am Anschlagteil 7a des Aufnahmeteils 7 in das Bohrloch 8 vollständig eingreifen kann und das Aufnahmeteil 7 an der Bohrlochmündung zur Anlage kommt. Durch den Zentrieransatz 9 wird das Aufnahmeteil 7 gehalten, so daß durch Ausschwenken des Bohrers 2 bei gleichzeitiger Rührbewegung eine Hinterschneidung 10 ausgerieben werden kann. Durch die Abstützung des Bundes 3 im Aufnahmeteil 7 ergibt sich das für die Ausschwenkung erforderliche Schwenklager. Nach dem Senkrechtstellen des Bohrers 2 wird ein weiteres zylindrisches Teilstück des Bohrloches gebohrt und danach eine weitere Hinterschneidung 10 vorgesehen. Dieser Vorgang ist beliebig oft wiederholbar, so daß ein mit mehreren Hinterschneidungen versehenes Bohrloch entsteht. Die vollständige Umfassung des Bundes 3 ergibt sich durch das mit dem Anschlagteil 7a verschraubbare Schließteil 7b, das an dem Bund 3 anliegende Lagerflächen 11 aufweist. Die Durchgangsbohrung 12 des Schließteiles 7b weist zum Bohrschaft einen Ringspalt auf, der den Schwenkwinkel des Bohrers 2 begrenzt. Die Stirnseite des Anschlagteiles 7a ist konvex gewölbt, so daß eine verkantfreie Anlage des Aufnahmeteils 7 an der Mauerwerksaußenfläche möglich ist. Zur besseren Handhabung der Bohrvorrichtung ist das Aufnahmeteil 7 mit einem rohrförmigen Handgriff 13 versehen, der gleichzeitig den Anschluß eines Absauggerätes ermöglicht.

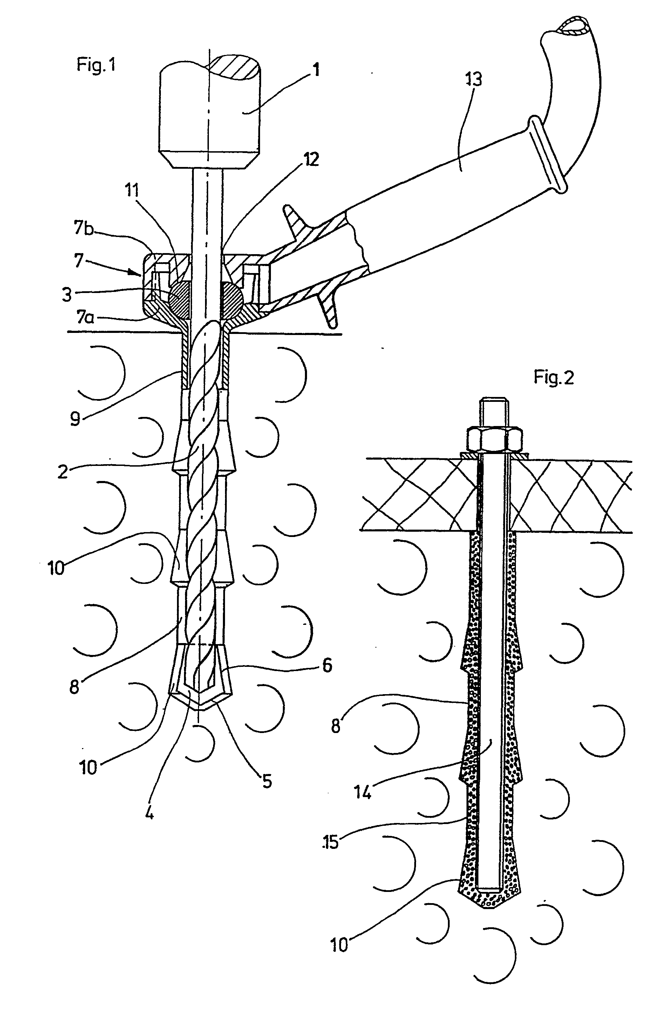

Bei der Befestigung nach Figur 2 ist in das mit der erfindungsgemäßen Bohrvorrichtung hergestellte Bohrloch 8 eine Ankerstange 14 eingesetzt, die durch eine Zementmischung, Kunstharzmasse oder dgl. in das Bohrloch eingebunden ist. Nach dem Aushärten des Bindemittels 15 ergeben sich durch die Hinterschneidungen 10 des Bohrloches 8 Formschlußknoten, die den Haltewert der eingemörtelten Ankerstange 14 erheblich erhöhen. Durch die Form des Bohrloches wird auch die Rißempfindlichkeit der Verankerung erheblich reduziert.

## Patentansprüche

1. Bohrvorrichtung zur Herstellung von Bohrlöchern mit an beliebiger Stelle setzbaren Hinterschneidungen, bestehend aus einem Bohrer (2) mit einem radial den Bohrschaft überragenden Seitenschneiden (6) aufweisenden Bohrplättchen (4), einem über den Bohrschaft gestülpten Bund (3), der sich zur Bildung eines Schwenklagers in einer Mulde eines einen hülsenförmigen, in das Bohrloch eingreifenden Zentrieransatz (9) aufweisenden Aufnahmeteils (7) abstützt, dadurch gekennzeichnet, daß der Bund (3) kugelförmig ausgebildet ist, daß der Bohrer (2) während des Bohrvorganges in dem kugelförmigen Bund (3) axial verschiebbar ist, und daß das Aufnahmeteil (7) die Rückseite des Bundes (3) umfaßt.

2. Bohrvorrichtung nach Anspruch 1, dadurch gekennzeichnet, daß das Aufnahmeteil zweiteilig ausgebildet ist, und daß das die Rückseite des Bundes (3) umfassende Schließteil (7b) auf dem die Mulde aufweisenden Anschlagteil (7a) aufschraubbar ist.

3. Bohrvorrichtung nach Anspruch 1, dadurch gekennzeichnet, daß zwischen der Hülsenbohrung des Schließteiles (7b) und dem Bohrschaft ein Ringspalt besteht, der den auf den gewünschten Ausformgrad der Hinterschneidung (10) abgestimmten Schwenkwinkel begrenzt.

4. Bohrvorrichtung nach Anspruch 1, dadurch gekennzeichnet, daß die Stirnseite des Anschlagteiles (7a) eine konvexe Wölbung aufweist.

5. Bohrvorrichtung nach Anspruch 1, dadurch gekennzeichnet, daß an dem Aufnahmeteil (7) ein als Handgriff (13) ausgebildeter Rohrstutzen angeordnet ist.

## Revendications

1. Dispositif de perçage de trous présentant des chambrages pouvant être formés en emplacements quelconques, dispositif composé d'un foret (2) comportant une pastille (4) de perçage, à arêtes latérales (6) faisant saillie radialement par rapport à la queue de ce foret, et d'un collet (3), qui est placé sur cette queue du foret, et qui, pour former un appui pivotant, s'applique dans une cuvette d'une cage (7) présentant un prolongement (9) en forme de manchon de centrage, qui s'engage dans le trou, dispositif caractérisé en ce que le collet (3) a une forme sphérique, en ce que le foret (2) peut coulisser axialement dans ce collet (3) pendant le perçage, et en ce que la cage (7) enserre le côté postérieur dudit collet (3).

2. Dispositif de perçage selon la revendication 1, caractérisé en ce que la cage (7) est en deux parties, et en ce que l'élément (7b) de fermeture, ou couvercle, qui enserre le côté postérieur du collet (3), peut être vissé sur l'élément (7c) de butée qui comporte la cuvette.

3. Dispositif de perçage selon la revendication 1, caractérisé en ce qu'il existe, entre le passage du couvercle (7b) et la queue du foret, un interstice annulaire, qui limite l'angle d'inclinaison correspondant ax la grosseur désirée pour les chambrages.

4. Dispositif de perçage selon la revendication 1, caractérisé en ce que la face frontale de l'élément (7a) de butée est bombée.

5. Dispositif de perçage selon la revendication 1, caractérisé en ce qu'un raccord tubulaire, ayant la conformation d'une poignée (13), est disposé sur la cage (7).

## Claims

1. Drilling device for the production of drilled holes with undercuts that can be placed at any position, comprising a drill (2) having a drill plate (4) with lateral blades (6) projecting radially beyond the drill shank, and a collar (3) that is placed over the drill shank and, in order to form a pivot bearing, is supported in a recess in a receiving member (7) having a sleeve-shaped centering projection (9) that penetrates into the drilled hole, characterised in that the collar (3) is of spherical construction, the drill (2) is axially displaceable in the spherical collar (3) during the drilling operation and the receiving member (7) encloses the rear of the collar (3).

2. Drilling device according to claim 1, characterised in that the receiving member is of two-part construction and the closure member (7b) enclosing the rear of the collar (3) can be screwed onto the stop member (7a) having the recess.

3. Drilling device according to claim 1, characterised in that there is an annular gap between the sleeve bore of the closure member (7b) and the drill shank, which gap defines the pivot angle which is matched to the desired degree of deformation of the undercut (10).

4. Drilling device according to claim 1, characterised in that the end face of the stop member (7a) is convexly curved.

5. Drilling device according to claim 1, characterised in that a tubular connection piece, constructed as a handle (13), is arranged on the receiving member (7).

Fig. 1

Fig. 2